# EUROPEAN PATENT SPECIFICATION

(11) **EP 4 537 669 B1**
(45) Date of publication and mention of the grant of the patent: **08.07.2026**
(21) Application number: 24204918.7
(22) Date of filing: 07.10.2024
(51) Int. Cl.: A23G 1/20, A23G 1/00, A23G 1/21

(54) **APPARATUS FOR MOULDING CHOCOLATE CONFECTIONERY PRODUCTS AND RELATIVE METHOD**
VORRICHTUNG ZUM FORMEN VON SCHOKOLADENKONFEKTPRODUKTEN UND ZUGEHÖRIGES VERFAHREN
APPAREIL DE MOULAGE DE PRODUITS DE CONFISERIE AU CHOCOLAT ET PROCÉDÉ ASSOCIÉ

(30) Priority: 09.10.2023 IT 202300020913
(43) Date of publication of application: 16.04.2025
(73) Proprietor: SACMI PACKAGING & CHOCOLATE S.P.A., 40026 Imola (BO) (IT)
(72) Inventor: BAGLIVO, Daniele, 40026 Imola (BO) (IT); MANZON, Daniele, 40026 Imola (BO) (IT)
(74) Representative: Studio Torta S.p.A.

(56) References cited:
- EP-A2- 0 945 069
- EP-A2- 1 444 900
- CN-A- 115 152 878
- US-A- 3 529 553
- US-B2- 8 562 332

## Description

### CROSS-REFERENCE TO RELATED APPLICATIONS

This patent application claims priority from Italian patent application no. 102023000020913 filed on October 9, 2023.

### TECHNICAL FIELD

The present invention relates to an apparatus for moulding chocolate confectionery products and a relative method for moulding confectionery products.

In particular, the present invention is advantageously, but not exclusively, applied to the field of the production of chocolate shells, to which the following discussion will explicitly refer without thereby loosing generality.

### BACKGROUND OF THE INVENTION

For moulding chocolate confectionery products, in particular chocolate shells, it is known to utilise one or more moulds provided with cavities and respective punches, configured to enter the cavities and mould chocolate shells having a given thickness.

During a known moulding process, a mould is generally advanced along a production line by means of a conveyor belt and, first of all, stopped at a filling station, where chocolate masses are fed into the cavities present in the mould. The chocolate masses are in a deformable state, for example semi-solid.

Then, the mould is advanced towards a punching station, where the deposited chocolate masses are respectively punched by the punches in the respective cavities.

In particular, at the punching station, the mould (thus the cavities) and the punches are movable relative to one another in order to assume a final position in which it is possible to produce chocolate shells having the desired thickness.

Generally, in order to perform the punching, the mould is first lifted towards the punches, for example by means of a servocontrol, carrying out approximately 80% of the total stroke required by the process. When the mould reaches a given pre-established height, the punches are actuated downwards to carry out the last stroke section (20%) and tune the descent more finely in the most delicate step of the process. In this step, the vertically actuated punches enter the cavities to mould the chocolate shells.

According to known solutions, all the punches are constrained to one single support, for example a plate, and during the last stroke section, their descent in the cavities occurs simultaneously by means of the actuation of said support. In these solutions, the support is actuated pneumatically, namely by means of actuators powered by compressed air.

According to another known solution, a line of compressed air is divided into several branches respectively assigned to the individual punches in order to actuate them downwards. In this case, the punches are independently supported on the plate so as to allow them to move in a sliding manner from top to bottom (and vice versa). In any case, their actuation is a single actuation, therefore their descent is simultaneous.

The above-mentioned solutions are broadly utilised, as pneumatic actuators are a simple manner for obtaining force and generating a linear movement in an advantageously cost-effective manner. These solutions, however, suffer from some drawbacks.

Firstly, pneumatic actuators allow performing a preset stroke, which is not adjustable during the process.

Furthermore, the pneumatic actuation does not offer a high positioning precision, which in the case of moulding chocolate shells having a low thickness, is highly relevant.

Finally, not generally having a verification of the volume of chocolate deposited in the cavities during the filling of the mould, it could occur that there are (even substantial) differences in volume between one cavity and another and that a different extent of penetration of the punches into the respective cavities is required in order to obtain a uniform thickness of the shells.

The management of the last stroke section performed by means of a pneumatic actuation of the punches does not, therefore, allow obtaining a high dimensional stability of the chocolate shells and, furthermore, does not offer process flexibility, should a variation in the dosage of the chocolate masses and/or in the thickness of the shells occur.

Examples of related prior art may be found in documents EP 0 945 069 A2, US 8 562 332 B2 and CN 115 152 878 A

The object of the present invention is to manufacture an apparatus for moulding chocolate confectionery products, in particular chocolate shells, which allows solving in a simple and cost-effective manner the problems of the above-described known solutions and, in particular, results to be constructively simple, safe, easy to control, and with a high functional efficiency and reliability.

### SUMMARY

According to the present invention, an apparatus for moulding chocolate confectionery products is provided as claimed in claim 1.

The present invention further relates to a method for moulding chocolate confectionery products, as claimed in claim 10.

The dependent claims set forth particular embodiments of the invention.

### BRIEF DESCRIPTION OF THE DRAWINGS

The invention will now be described with reference to the accompanying figures, which illustrate a non-limiting example embodiment, wherein:
- Figure 1 is a schematic perspective view, with parts removed for clarity, of an apparatus for moulding chocolate confectionery products, in accordance with the present invention;
- Figure 2 illustrates, in section, a detail of the apparatus of Figure 1 during a step of the moulding process; and
- Figure 3 is an enlarged detail of Figure 2 with reference to a different step of the moulding process.

### DETAILED DESCRIPTION

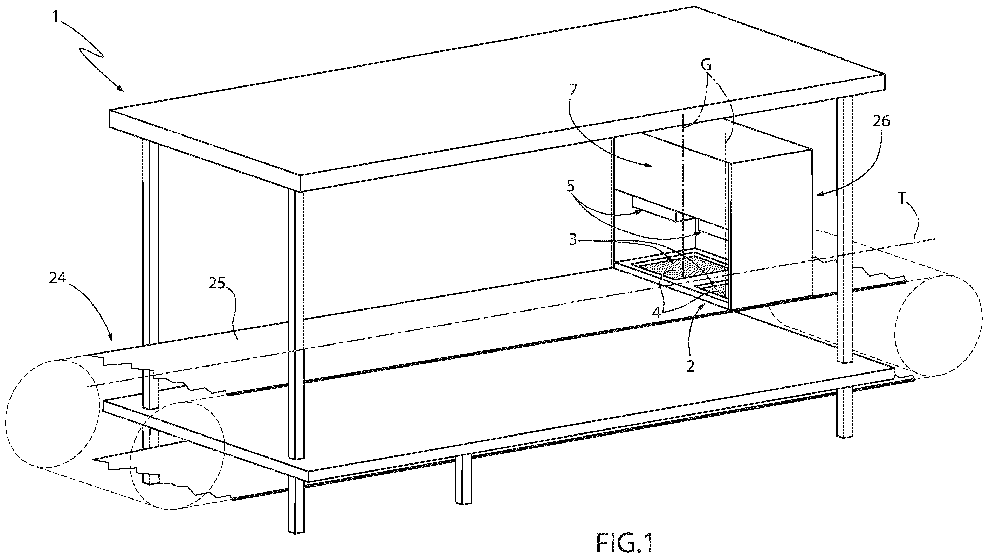

In Figure 1, reference numeral 1 indicates, as a whole, an apparatus for moulding chocolate confectionery products.

The apparatus 1 comprises: a mould 2 comprising at least two cavities 3, designed to receive respective chocolate masses 4; at least two punches 5, respectively configured to punch the chocolate masses 4 inside the cavities 3 at respective relative stop positions PA relative to the mould 2, such that chocolate shells 6 are moulded between the mould 2 and the punches 5.

According to the embodiment illustrated in Figure 1, the mould 2 has two identical cavities 3, inside which the chocolate masses 4 are present, potentially in identical or different amounts, without any loss in generality. The punches 5 are supported by a support device 7 of the apparatus 1.

In particular, the punches 5 are aligned, in this case vertically, with the respective cavities 3. Furthermore, for example, the punches 5 are located in a position overlying the mould 2.

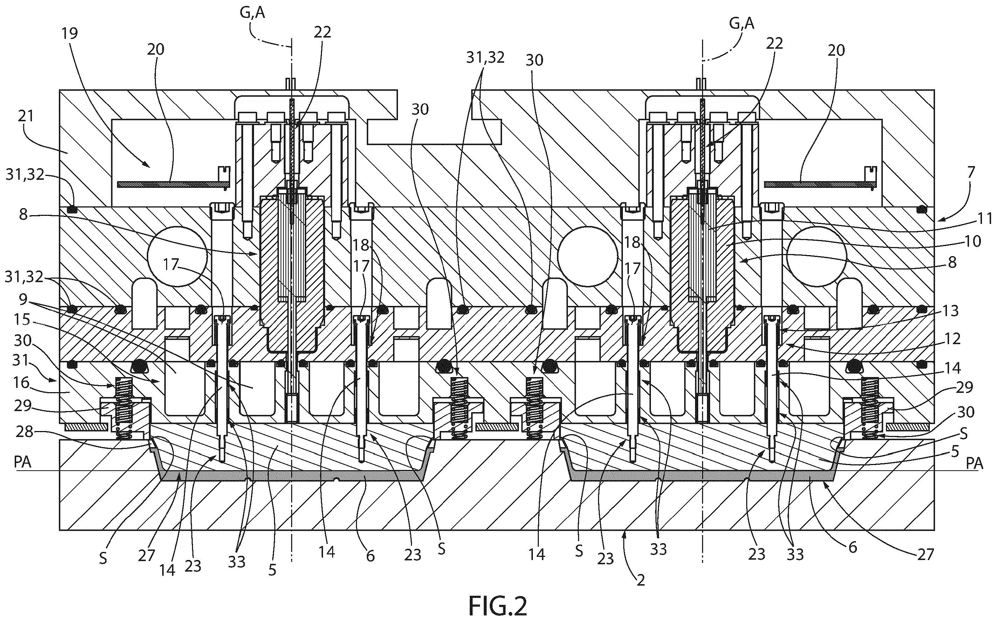

The apparatus 1 is configured to produce two chocolate shells 6, preferably approximately identical to each other; in other words, by performing a punching step, i.e. a descent of the punches 5 in the cavities 3, two shells 6 are formed, as is illustrated in Figure 2.

Expressions such as substantially, approximately, and the like, are to be understood with reference to the tolerances commonly accepted in the field of moulding chocolate confectionery products.

According to other embodiments not illustrated, the mould 2 has more than two cavities, so as to mould more than two shells 6 at the end of the punching step. In particular, the mould 2 has cavities, for example in an even number, arranged on two parallel side by side rows.

The number of punches 5 depends on the number of cavities 3 present in the mould 2, just as their arrangement is defined based on the arrangement of the cavities 3 on the mould 2.

The apparatus 1 comprises two independently controllable electric actuator devices 8 for transforming an electrical power into a corresponding movement of the punches 5 at the relative stop positions PA.

The electrical power can come, for example, from an electrical power supply network, to which the actuators 8 are electrically connectable. In other words, the actuators 8 are configured to draw or to be supplied with the electrical power to be transformed, for example coming from an electrical power source such as the electrical power supply network.

In detail, each punch 5 is coupled to a respective electric actuator device 8, which is configured to actuate such punch 5 and control its movement in an independent manner relative to the other punches 5.

In the illustrated embodiment, the two punches 5 are actuated by the respective actuator devices 8, for example arranged in positions overlying the punches 5, in particular at the support device 7.

For example, the number of electric actuator devices 8 is equal to the number of punches 5.

As is illustrated in Figure 2, the punches 5 are immersed in the chocolate masses 4 at the relative stop positions PA, determined based on the required thicknesses for the chocolate shells 6 to be formed.

Advantageously, thanks to the independent actuation, a respective relative stop position PA is associated with each punch 5. In particular, the relative stop positions PA of the punches 5 can be identical or different, based on the process requirements.

In the illustrated embodiment, the punches 5 are cooled by means of a cooling device 15 of the apparatus 1. In detail, the punches 5 are cooled by means of a cooling fluid that circulates in seats 9 obtained in the support device 7. In particular, the seats 9 are obtained at a plate 16 which forms part of the support device 7.

Thanks to the cooling device 15, once the immersion of the punches 5 in the chocolate masses 4 present in the cavities 3 has occurred, the masses 4 solidify so as to maintain the desired shape of the shells 6.

According to the illustrated non-limiting embodiment, each electric actuator device 8 is a linear electromagnet configured to perform linear movements when it is excited or powered. In other words, each electric actuator device 8 comprises a solenoid 10 and a ferromagnetic core 11, which is actuated (moved from an initial position to a final position) by the electromagnetic field generated by the solenoid 10 when electric current passes through it, i.e. when it is powered by the electrical power to be transformed. The actuation of the core 11 determines the descent of the punch 5 or corresponds to the descent of the punch.

According to embodiments not illustrated, the electric actuator devices 8 are electromechanical linear actuators, which convert, for example, the rotary motion of respective DC motors (forming part of the linear actuators) into relative linear movements of the punches 5. In general, any device adapted for transforming electrical power into a linear movement of a punch 5 is suitable for being utilised for the actuation of the punch 5.

Preferably, the apparatus 1 comprises guiding devices 23 configured to guide the movement of the punches 5 along rectilinear directions G parallel to one another.

This way, the movement of the punches 5 towards the relative stop positions PA caused by the electric actuators 8 is guided along the directions G by means of the guiding devices 23.

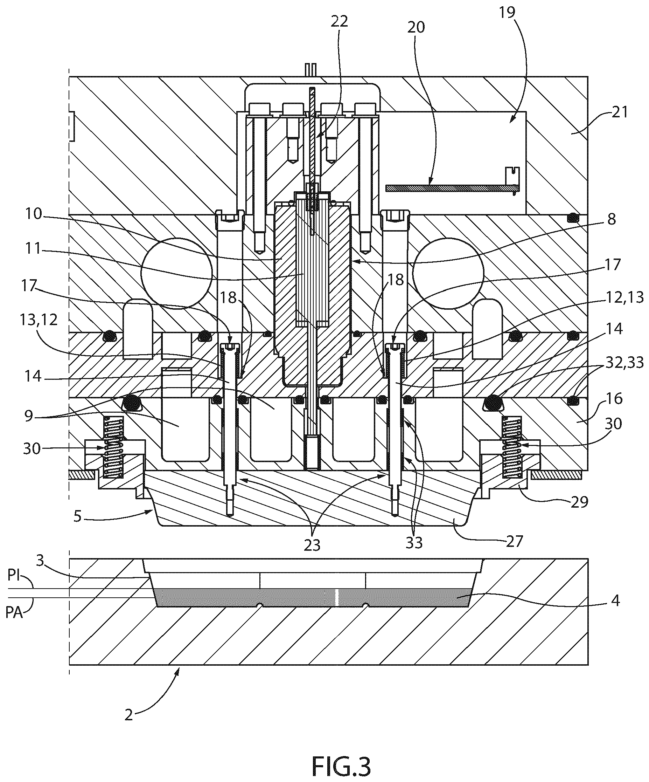

In particular, the guiding devices 23 comprise at least two guiding rods 14 for each punch 5; more in particular, with specific reference to Figures 2 and 3, the rods 14 are located on the sides of the electric actuator device 8, precisely one on the right and one on the left of the axis A of the solenoid 10 and equidistant from said axis A. In the illustrated embodiment, the rectilinear directions G are parallel to the axis A and thus indicated in Figures 2 and 3 on the direction of such axis A.

Additionally, the guiding devices 23 comprise a pair of bushings 33 for each rod 14; the rods 14 are coupled in a sliding manner to the relative bushings 33, so as to specifically obtain the sliding coupling between the rod 14 and the plate 16.

Advantageously, each electric actuator device 8 comprises elastic return means 12 configured to determine the return of the respective punch 5 to an initial position PI thereof.

If the electric actuator device 8 comprises a single-acting solenoid 10, as in the illustrated embodiment, the elastic return means 12 can be particularly advantageous for allowing the ascent of the punches 5, after the punching of the chocolate.

As is illustrated in Figures 2 and 3, the elastic return means 12 comprise one or more springs 13, for example two compression springs 13, specifically mounted on the two respective guiding rods 14.

The springs 13 are arranged between the heads 17 of the rods 14 and the respective striking surfaces 18 of the plate 16.

Therefore, during the descent of the punches 5, the springs 13 are compressed between the head 17 and the striking surface 18. Once the descent has ended, and thus the punching of the chocolate, the springs 13 return to the rest position causing the ascent of the punch 5 to its initial position PI.

In the case where an electric actuator device 8 configured for movements in the two opposite directions is utilised, the elastic return means 12 can be superfluous because the return stroke can be determined by the actuator 8. According to some variations, the guiding devices 23 can be linear guides, or other systems suitable for guiding the movement of the punch 5 actuated along a straight line.

Preferably, the apparatus 1 comprises a control unit 19 configured to control in open loop the electric actuator devices 8, by means of respective predetermined relative position targets corresponding to said relative stop positions PA, to bring the punches 5 to the relative stop positions PA.

In the illustrated embodiment, the control unit 19 comprises two control electronic circuit boards or blocks 20, each configured to control one of the two punches 5. For example, the electronic circuit boards 20 are arranged inside the support device 7 in a position overlying the punches 5 and the cooling device 15. Advantageously, the control electronic control circuit boards 20 are located inside the plate 21, namely the upper plate of the support device 7.

According to some variations, when the punches 5 are in a number greater than two and are arranged side by side on two parallel rows, the control electronic circuit board 20 are two and each circuit board 20 controls a respective row of punches 5.

In particular, in order to control the vertical movement of the punches 5 in open loop, namely without a feedback on the actual position of the punches 5, the control electronic circuit boards 20 are programmed to send predetermined position targets to the electric actuator devices 8, in the form of signals, namely relative position reference values of the punches 5 relative to the mould 2; in other words, the predetermined targets are target positions or preset setpoints of the electronic circuit boards 20, for example stored by the electronic circuit boards 20.

Alternatively or additionally, the apparatus 1 comprises transducers 22 configured to detect quantities indicative of the relative positions of the punches 5 and generate signals relative to the detected quantities. The control unit 19 is configured to receive the signals from the transducers 22, extract information from the signals about the detected quantities and control the electric actuator devices 8 according to the extracted information to bring the punches 5 to the relative stop positions PA.

In general, a transducer 22 is a position transducer capable of generating output signals corresponding (for example proportional) to the position assumed by a moving member. In the specific illustrated case, the transducers 22 detect the positions of the cores 11 of the solenoids 10 and consequently the relative positions of the punches 5. In particular, a respective transducer 22 is associated with each actuator device 8, and thus with each punch 5.

According to some variations, the detection of the position of the punches 5 is performed by means of other detection devices or sensors, possibly also making use of observers or mathematical models, configured to detect quantities indicative of the relative positions of the punches 5 and to generate signals relative to the detected quantities.

Preferably, the control unit 19 is configured to stop the punches 5 by means of the electric actuator devices 8 when the extracted information indicates that the punches 5 have reached threshold values of the relative stop positions PA.

In other words, the control unit 19, in use, performs a threshold control, namely controls the reaching of a threshold, in this case a threshold of relative stop position PA of the punches 5, and when the threshold is reached, it stops the punches 5. During the descent of the punches 5 towards the mould 2, the transducers 22 detect the positions of the cores 11 and send signals to the control unit 19, which, by processing the signals relative to the positions of the cores 11, extracts the information necessary for determining whether the punches 5 have reached the threshold values of the relative stop positions PA. If the threshold values have not been reached, the control unit 19 continues to actuate the actuators 8 so as to prolong the descent of the punches 5. When the thresholds are reached, the control unit 19 stops the actuators 8.

As already mentioned in the foregoing, the apparatus 1 comprises guiding devices 23 configured to guide the movement of the punches 5 along rectilinear directions G parallel to each other, so that the electric actuator devices 8, in use, bring the punches 5 to the relative stop positions PA.

Preferably, the apparatus comprises a conveyor device 24 designed to move the mould 2 along a transport direction T.

The rectilinear directions G lie on a plane transverse to the transport direction T.

As is illustrated in Figure 1, the transport direction T allows the advancement of the mould 2 from one part to the other of the apparatus 1, for example from right to left, whereas the rectilinear directions G along which the punches 5 are moved, are vertical.

According to some variations, the directions G are not vertical relative to the apparatus 1, but have an oblique inclination based on the punching operation to be performed and the shape of the mould 2.

Preferably, the conveyor device 24 comprises a conveyor belt 25 movable along the transport direction T and the mould 2 is carried by said conveyor belt 25 so that said conveyor belt 25, in use, moves the mould 2 along the transport direction T.

In particular, the conveyor device 24 may comprise mechanical transmissions and actuation systems known per se (not illustrated in Figure 1) and configured to move the conveyor belt 25.

Preferably, the conveyor device 24 is configured to stop the mould 2, in particular according to the direction T, at a punching station 26 (the mould 2 may move relative to the support device 7 along the directions G in the station 26) comprising the punches 5 and the electric actuator devices 8, in which the control unit 19 is configured to bring both punches 5 to the relative stop positions PA when the mould 2 is at the punching station 26.

The conveyor device 24 is further configured to subsequently advance the mould 2 out of the punching station 26 after the control unit 19 has brought both punches 5 to their relative stop positions PA (more precisely after the ascent of the punches 5, in particular to the relative rest positions PI).

In other words, the punching of the chocolate masses 4 present in the cavities 3 is performed only when the mould 2 is located, in particular stationary, inside or at the punching station 26.

In practice, the movement of the punches 5 (and thus the electric actuator devices 8) is synchronised with the movement of the conveyor device 24, so that the descent of the punches 5 in the cavities 3 occurs when the mould 2 is located in a predetermined position along the direction T, defined by the punching station 26.

Generally, furthermore, the punches 5 are actuated only downwards for carrying out the last section (approximately 20%) of the total stroke of the punching operation, in order to tune the descent more precisely in the most delicate step of the process. In particular, the stroke of the punches 5 goes from the initial position PI to the relative stop position PA, better illustrated in Figure 3.

In detail, before initiating the descent of the punches 5, the mould 2 is lifted towards the punches 5 by means of a lifting device (known and not illustrated) which comprises, for example, a servocontrol, carrying out the first section (approximately 80%) of the total stroke required by the process. At the end of the lifting operation, the mould 2 reaches a given pre-established height and the punches 5 are located in the initial position PI, which in the example illustrated in Figure 3, coincides with the surface level of the deposited chocolate mass 4. The punches 5, at this point, are vertically actuated towards the mould 2 so as to enter the cavities 3 and carry out the last stroke section.

Advantageously, the apparatus 1 comprises sealing means 31 configured to ensure the sealing of fluids inside the support device 7.

In particular, for each punch 5, the sealing means 31 comprise a containment plate 29 and two sealing springs 30, which are configured to ensure the sealing at contact points S between punch 5 and mould 2, when the punching of the chocolate mass 4 occurs. In detail, during the first stroke section, the mould 2 is moved so that the containment plate 29 enters into contact with the mould 2, in particular at the contact points S. The descent of the punches 5 begins after such contact is established and is ensured by the compression of the sealing springs 30.

Substantially, the containment plate 29 and the springs 30 prevent the chocolate mass 4 from coming out of the cavity 3, when each punch 5 presses the mass 4 for forming the shell 6, causing an ascent of the mass 4 along the walls of the cavity 3.

Furthermore, the sealing means 31 comprise elastic rings 32, in particular of the O-ring type, to ensure the sealing between the different plates which make up the support device 7. In particular, the elastic rings 32 ensure that the cooling fluid which circulates in the seats 9 does not come out of the seats 9.

After the punching operation, as soon as the chocolate shells 6 have been moulded also thanks to the action of the cooling device 15 and the punches 5 are caused to return upwards by the elastic return means 12, the mould 2 is brought back to its initial position (prior to the lifting operation) and the conveyor device 24 is actuated, always along the transport direction T, so as to bring the mould 2 out of the punching station 26.

Advantageously, the punches 5 comprise respective convex ends 27 for punching the chocolate masses 4.

As is illustrated in detail in Figure 3, the convex end 27 of the punch 5 is shaped in such a manner to enter the cavity 3, namely a concave-shaped space obtained in the mould 2. The punch 5 and the cavity 3 have substantially corresponding shapes and, as is illustrated in Figure 2, the chocolate shell 6 is formed in the gap 28 between cavity 3 and punch 5 which is formed when the punch 5 is in the relative stop position PA.

According to a further aspect of the present invention, a method for moulding chocolate confectionery products by means of an apparatus 1 is provided. In particular, the method allows moulding chocolate shells 6.

The method comprises the steps of: depositing in the at least two cavities 3 respective chocolate masses 4; and controlling the two electric actuator devices 8 independently so as to transform an electrical power into a corresponding movement of the punches 5 in the relative stop positions PA, thereby moulding chocolate shells 6 between the mould 2 and the punches 5.

Preferably, the punches 5 are moved towards the relative stop positions PA along rectilinear directions G parallel to each other.

Preferably, the method comprises, in sequence, the steps of: stopping the mould 2 by means of a conveyor device 24 at a punching station 26 comprising the punches 5 and the electric actuator devices 8; bringing both punches 5 to the relative stop positions PA when the mould 2 is, in particular stationary, at the punching station 26; and advancing the mould 2 out of the punching station 26 after the punches 5 have reached the relative stop positions PA.

In particular, the step of stopping the mould 2 at the punching station 26 occurs subsequent to the step of depositing the chocolate masses 4 in the respective cavities 3. Furthermore, the step of depositing the chocolate masses 4, in this case, is performed in a filling station (not illustrated), placed before the punching station 26 along the transport direction T of the mould 2.

According to some variations, the punching station 26 comprises dosage devices for depositing the chocolate masses 4 in the cavities 3, prior to performing the punching step.

Preferably, the method comprises the step of controlling in open loop the electric actuator devices 8, by means of respective predetermined relative position targets corresponding to said relative stop positions PA, to bring the punches 5 to the relative stop positions PA.

In other words, the control of the electric actuator devices 8 is performed in an independent manner without feedback on the respective relative positions of the punches 5.

Generally, as mentioned above, the total stroke required by the punching process is equal to the sum of the stroke performed by the mould 2 to bring itself into contact with the plate 29 and the descent stroke of the punches 5 in the cavities 3. In particular, the stroke of the punches 5 is equal to approximately 20% of the total stroke. For example, if the total stroke is 5 mm, the sole stroke of the punches is 1 mm.

According to what mentioned, the method preferably comprises a lifting step, in which the mould 2 is lifted so as to determine the contact between the mould 2 and the plate 29. When such contact is established, the punches 5 are located in the respective initial positions PI and the step of controlling in open loop the electric actuator devices 8 to bring the punches 5 to the relative stop positions PA can be initiated.

Preferably, the method comprises the steps of: detecting quantities indicative of the relative positions of the punches 5 and generating signals relative to the detected quantities by means of transducers 22; extracting information from the signals about the detected quantities; and controlling the electric actuator devices 8 according to the extracted information to bring the punches 5 to the relative stop positions PA.

In particular, the step of detecting quantities and generating signals occurs during the descent of the punch 5, so that the relative position of the punches 5 can be controlled based on the information extracted from the signals. In other words, it is possible to know the relative position of the punches 5 thanks to the use of a sensor, the transducer 22, and thus consequently adjust the position thereof.

Preferably, the method comprises the step of stopping the punches 5 by means of the electric actuator devices 8 when the extracted information indicates that the punches 5 have reached threshold values of the relative stop positions PA.

Therefore, thanks to the use of the transducers 22 and thus to the fact that the relative position of the punches 5 is known during the descent, it is possible to perform a control on the stopping of the punches 5.

According to an embodiment of the method, the descent of the punches 5 is initiated at the same time instant and is stopped in the respective stop positions PA at different instants. According to some variations, the descent of the punches 5 is initiated at different instants. In this case, the stop can be synchronous or asynchronous.

According to a variation of the method, it is possible to perform a feedback control (in closed loop) on the position and/or the force exerted by the punches 5 on the mould 2 during the punching operation and to adjust the position and/or the force thanks to an error signal which is the difference between the input (position and/or force target value) and the output (detected position and/or force value). In such case, the apparatus 1 is provided with a position and/or force sensor configured to detect quantities indicative of the relative positions of the punches 5 and/or of the forces exerted by the punches 5 on the mould 2 and to generate signals relative to the detected quantities.

Although the above-described invention makes particular reference to a very precise example embodiment, it is not to be considered limited to such example embodiment, falling within its scope all the variations, modifications or simplifications covered by the appended claims, such as, for example, a different shape of the punches 5, a number of punches 5 greater than two, the use of electric actuator devices 8 or conveyor devices 24 of another type, a different arrangement of the components of the apparatus 1, etcetera.

In particular, if the cavities 3 (consequently the punches 5) are very small and/or in a very large number (for example, in the order of a hundred), the control of the punches 5 can be performed in groups; in other words, the punches 5 are organised in groups and each group is actuated by a relative electric actuator device 8.

The present invention has multiple advantages.

First of all, the use of electric actuator devices 8, instead of pneumatic actuators of the known solutions, allows adjusting the stroke of the punches 5 also during the moulding process. The electric actuators are in fact controlled by a control unit 19 which allows resetting the stroke based on need and does not operate with a single preset stroke value that cannot be modified, as in the case of the pneumatic actuation.

In other words, in the case of pneumatic actuation, the set stroke must always be carried out completely, whereas with the actuation of electric type it is possible to interrupt it also in intermediate positions, based on the process requirements.

Furthermore, the electric actuation, unlike the pneumatic one, offers high positioning precision, which in the case of moulding chocolate shells 6 with low thickness, is highly relevant. In fact, the electric actuators 8 can perform much smaller strokes than the pneumatic ones, even reaching the fraction of a millimetre.

From the point of view of the maintenance of the apparatus 1, the electric actuation further offers the advantage of being cleaner than the pneumatic one and of being entirely panel-managed.

As a further advantage, the independent control of the electric actuator devices 8 allows obtaining a penetration of the punches 5 in the cavities 3 of different extent; in other words, it is possible for the relative stop positions PA to be different for each punch 5.

This results to be particularly advantageous because, frequently, between one cavity 3 and the other there are (even substantial) differences in the volume of deposited chocolate and it is thus necessary to set a different stroke for the punches 5.

In practical terms, it thus results to be possible to obtain shells 6 having different thicknesses, or to adjust the descent of the punches 5 and thus the thickness of the shells 6 based on the chocolate mass 4 present in the cavity 3.

This further allows avoiding the excessive compression of the mass 4 (in the case where the deposited quantity is excessive) and thus its possible undesired coming out of the mould 2.

In some cases, if the fine tuning of the position of the punches 5 is highly performing, it is possible to avoid utilising gaskets between the moulds and thus reduce the number of components, as well as the assembling complexity of the apparatus 1.

Furthermore, the mould 2 is usually made of polycarbonate, a very resistant plastic material that allows obtaining an excellent finishing of the shells 6, but it is highly non-deformable. Consequently, an adequate management of the fine tuning is necessary, since the mould does not react deforming in response to possible excessive stresses due to the presence of volumes of chocolate that are greater than the ones desired.

Based on the foregoing, it is evident that the present invention allows obtaining a high dimensional stability and a more uniform layer of the chocolate shells 6, thanks to the management of the last punching stroke section by means of the independent electric actuation of the punches.

## Claims

1. Apparatus (1) for moulding chocolate confectionery products; the apparatus comprises:
- a mould (2) comprising at least two cavities (3), designed to receive respective chocolate masses (4);
- at least two punches (5), respectively configured to punch the chocolate masses (4) inside the cavities (3) at respective relative stop positions (PA) relative to the mould (2), such that chocolate shells (6) are moulded between the mould (2) and the punches (5);
the apparatus (1) is **characterised by** comprising two independently controllable electric actuator devices (8) for transforming an electrical power into a corresponding movement of the punches (5) to said relative stop positions (PA).

2. Apparatus (1) according to claim 1 and comprising a control unit (19) configured to control in open loop the electric actuator devices (8), by means of respective predetermined relative position targets corresponding to said relative stop positions (PA), to bring the punches (5) to the relative stop positions (PA).

3. Apparatus (1) according to claim 1 and comprising:
- transducers (22) configured to detect quantities indicative of the relative positions of the punches (5) and generate signals relative to the detected quantities; and
- a control unit (19) configured to receive the signals from the transducers (22), extract information from the signals about the detected quantities, and control the electric actuator devices (8) according to the extracted information to bring the punches (5) to the relative stop positions (PA).

4. Apparatus (1) according to claim 3, wherein the control unit (19) is configured to stop the punches (5) by means of the electric actuator devices (8) when the extracted information indicates that the punches (5) have reached threshold values of the relative stop positions (PA).

5. Apparatus (1) according to any one of claims 2 to 4 and comprising guiding devices (23) configured to guide the movement of the punches (5) along rectilinear directions (G) parallel to each other, so that the electric actuator devices (8), in use, bring the punches (5) to the relative stop positions (PA).

6. Apparatus (1) according to claim 5 and comprising a conveyor device (24) designed to move the mould (2) along a transport direction (T), wherein the rectilinear directions (G) lie on a plane transverse to the transport direction (T).

7. Apparatus (1) according to claim 6, wherein the conveyor device (24) comprises a conveyor belt (25) movable along the transport direction (T) and the mould (2) is carried by said conveyor belt (25) so that said conveyor belt (25), in use, moves the mould (2) along the transport direction (T).

8. Apparatus (1) according to claim 6 or 7, wherein the conveyor device (24) is configured to, in sequence:
- stop the mould (2) at a punching station (26) comprising the punches (5) and the electric actuator devices (8), wherein the control unit (19) is configured to bring both punches (5) to the relative stop positions (PA) when the mould (2) is at the punching station (26); and
- advance the mould (2) out of the punching station (26) after the control unit (19) has brought both punches (5) to the relative stop positions (PA).

9. Apparatus (1) according to any one of the preceding claims, wherein the punches (5) comprise respective convex ends (27) for punching the chocolate masses (4).

10. Method for moulding chocolate confectionery products by means of an apparatus (1) according to any one of claims 1 to 9, the method comprises the steps of:
- depositing in the at least two cavities (3) respective chocolate masses (4); and
- controlling the two electric actuator devices (8) independently so as to transform an electrical power into a corresponding movement of the punches (5) in the relative stop positions (PA) thereby moulding chocolate shells (6) between the mould (2) and the punches (5).

11. Method according to claim 10, wherein the punches (5) are moved towards the relative stop positions (PA) along rectilinear directions (G) parallel to each other.

12. Method according to claim 10 or 11 and comprising, in sequence, the steps of:
- stopping the mould (2) by means of a conveyor device (24) at a punching station (26) comprising the punches (5) and the electric actuator devices (8);
- bringing both punches (5) to the relative stop positions (PA) when the mould (2) is at the punching station (26); and
- advancing the mould (2) out of the punching station (26) after the punches (5) have reached the relative stop positions (PA).

13. Method according to any one of claims 10 to 12 and comprising the step of controlling in open loop the electric actuator devices (8), by means of respective predetermined relative position targets corresponding to said relative stop positions (PA), to bring the punches (5) to the relative stop positions (PA).

14. Method according to any one of claims 10 to 12 and comprising the steps of:
- detecting quantities indicative of the relative positions of the punches (5) and generating signals relative to the detected quantities by means of transducers (22);
- extracting information from the signals about the detected quantities; and
- controlling the electric actuator devices (8) according to the extracted information to bring the punches (5) to the relative stop positions (PA).

15. Method according to claim 14 comprising the step of stopping the punches (5) by means of the electric actuator devices (8) when the extracted information indicates that the punches (5) have reached threshold values of the relative stop positions (PA).

## Patentansprüche

1. Vorrichtung (1) zum Formen von Schokoladenwaren, wobei die Vorrichtung Folgendes umfasst:
- eine Form (2), umfassend mindestens zwei Hohlräume (3), die ausgestaltet sind, um jeweilige Schokoladenmassen (4) aufzunehmen;
- mindestens zwei Stempel (5), die jeweils ausgelegt sind, um die Schokoladenmassen (4) in die Hohlräume (3) an jeweiligen Anschlagspositionen (PA) relativ zu der Form (2) hineinzudrücken, sodass Schokoladenhüllen (6) zwischen der Form (2) und den Stempeln (5) geformt werden,
wobei die Vorrichtung (1) **dadurch gekennzeichnet ist, dass** sie zwei unabhängig steuerbare elektrische Betätigungseinrichtungen (8) zum Umwandeln einer elektrischen Leistung in eine entsprechende Bewegung der Stempel (5) zu den relativen Anschlagspositionen (PA) umfasst.

2. Vorrichtung (1) nach Anspruch 1 und umfassend eine Steuereinheit (19), die ausgelegt ist, um die elektrischen Betätigungseinrichtungen (8) mittels jeweiliger vorbestimmter relativer Positionsziele entsprechend den jeweiligen Anschlagspositionen (PA) in einem offenen Kreislauf zu steuern, um die Stempel (5) zu den relativen Anschlagspositionen (PA) zu bringen.

3. Vorrichtung (1) nach Anspruch 1 und umfassend:
- Messwandler (22), die ausgelegt sind, um Mengen zu erkennen, die Aufschluss über die relativen Positionen der Stempel (5) geben, und Signale in Bezug auf die erkannten Mengen zu generieren, und
- eine Steuereinheit (19), die ausgelegt ist, um die Signale von den Messwandlern (22) zu empfangen, Informationen über die erkannten Mengen aus den Signalen zu extrahieren und die elektrischen Betätigungseinrichtungen (8) gemäß den extrahierten Informationen zu steuern, um die Stempel (5) zu den jeweiligen Anschlagspositionen (PA) zu bringen.

4. Vorrichtung (1) nach Anspruch 3, wobei die Steuereinheit (19) ausgelegt ist, um die Stempel (5) mittels der elektrischen Betätigungseinrichtungen (8) anzuhalten, wenn die extrahierten Informationen angeben, dass die Stempel (5) Schwellenwerte der relativen Anschlagpositionen (PA) erreicht haben.

5. Vorrichtung (1) nach einem der Ansprüche 2 bis 4 und umfassend Führungseinrichtungen (23), die ausgelegt sind, um die Bewegung der Stempel (5) entlang geradliniger Richtungen (G), die parallel zueinander verlaufen, zu führen, sodass die elektrischen Betätigungseinrichtungen (8) die Stempel (5) bei Gebrauch zu den jeweiligen Anschlagpositionen (PA) bringen.

6. Vorrichtung (1) nach Anspruch 5 und umfassend eine Fördereinrichtung (24), die ausgestaltet ist, um die Form (2) entlang einer Transportrichtung (T) zu bewegen, wobei die geradlinigen Richtungen (G) auf einer Ebene quer zu der Transportrichtung (T) liegen.

7. Vorrichtung (1) nach Anspruch 6, wobei die Fördereinrichtung (24) ein Förderband (25) umfasst, das entlang der Transportrichtung (T) bewegbar ist, und die Form (2) von dem Förderband (25) getragen wird, sodass das Förderband (25) die Form (2) bei Gebrauch entlang der Transportrichtung bewegt.

8. Vorrichtung (1) nach Anspruch 6 oder 7, wobei die Fördereinrichtung (24) ausgelegt ist, um nacheinander
- die Form (2) an einer Stempelstation (26), umfassend die Stempel (5) und die elektrischen Betätigungseinrichtungen (8) anzuhalten, wobei die Steuereinheit (19) ausgelegt ist, um beide Stempel (5) zu den relativen Anschlagspositionen (PA) zu bringen, wenn sich die Form (2) an der Stempelstation (26) befindet, und
- die Form (2) aus der Stempelstation (26) herauszufahren, nachdem die Steuereinheit (19) beide Stempel (5) zu den relativen Anschlagspositionen (PA) gebracht hat.

9. Vorrichtung (1) nach einem der vorhergehenden Ansprüche, wobei die Stempel (5) jeweils konvexe Enden (27) zum Hineindrücken der Schokoladenmassen (4) umfassen.

10. Verfahren zum Formen von Schokoladenwaren mittels einer Vorrichtung (1) nach einem der Ansprüche 1 bis 9, wobei das Verfahren die folgenden Schritte umfasst:
- Ablegen jeweiliger Schokoladenmassen (4) in den mindestens zwei Hohlräumen (3) und
- Steuern der beiden elektrischen Betätigungseinrichtungen (8) unabhängig, sodass eine elektrische Leistung in eine entsprechende Bewegung der Stempel (5) in den jeweiligen Anschlagspositionen (PA) umgewandelt wird, wodurch Schokoladenhüllen (6) zwischen der Form (2) und den Stempeln (5) geformt werden.

11. Verfahren nach Anspruch 10, wobei die Stempel (5) in Richtung der relativen Anschlagspositionen (PA) entlang geradliniger Richtungen (G), die parallel zueinander verlaufen, bewegt werden.

12. Verfahren nach Anspruch 10 oder 11 und umfassend nacheinander die folgenden Schritte:
- Anhalten der Form (2) mittels einer Fördereinrichtung (24) an einer Stempelstation (26), umfassend die Stempel (5) und die elektrischen Betätigungseinrichtungen (8);
- Bringen beider Stempel (5) zu den jeweiligen Anschlagspositionen (PA), wenn sich die Form (2) an der Stempelstation (26) befindet, und
- Herausfahren der Form (2) aus der Stempelstation (26), nachdem die Stempel (5) die relativen Anschlagspositionen (PA) erreicht haben.

13. Verfahren nach einem der Ansprüche 10 bis 12 und umfassend den Schritt des Steuerns der elektrischen Betätigungseinrichtungen (8) in einem offenen Kreislauf mittels jeweiliger vorbestimmter relativer Positionsziele entsprechend den relativen Anschlagspositionen (PA), um die Stempel (5) zu den relativen Anschlagspositionen (PA) zu bringen.

14. Verfahren nach einem der Ansprüche 10 bis 12 und umfassend die folgenden Schritte:
- Erkennen von Mengen, die Aufschluss über die relativen Positionen der Stempel (5) geben, und Generieren von Signalen in Bezug auf die erkannten Mengen mittels Messwandlern (22);
- Extrahieren von Informationen aus den Signalen über die erkannten Mengen und
- Steuern der elektrischen Betätigungseinrichtungen (8) gemäß den extrahierten Informationen, um die Stempel (5) zu den relativen Anschlagspositionen (PA) zu bringen.

15. Verfahren nach Anspruch 14, umfassend den Schritt des Anhaltens der Stempel (5) mittels der elektrischen Betätigungseinrichtungen (8), wenn die extrahierten Informationen angeben, dass die Stempel (5) Schwellenwerte der jeweiligen Anschlagspositionen (PA) erreicht haben.

## Revendications

1. Appareil (1) pour le moulage de produits de confiserie au chocolat ; l'appareil comprend :
- un moule (2) comprenant au moins deux cavités (3), conçues pour recevoir des masses de chocolat (4) respectives ;
- au moins deux poinçons (5), respectivement configurés pour poinçonner les masses de chocolat (4) à l'intérieur des cavités (3) au niveau de positions d'arrêt relatives respectives (PA) par rapport au moule (2), de sorte que des coquilles de chocolat (6) sont moulées entre le moule (2) et les poinçons (5) ;
l'appareil (1) est **caractérisé en ce qu'il** comprend deux dispositifs d'actionnement électrique (8) contrôlables indépendamment pour transformer une puissance électrique en un mouvement correspondant des poinçons (5) vers lesdites positions d'arrêt relatives (PA).

2. Appareil (1) selon la revendication 1 et comprenant une unité de commande (19) configurée pour commander en boucle ouverte les dispositifs d'actionnement électrique (8), au moyen de cibles de position relative prédéterminées respectives correspondant auxdites positions d'arrêt relatives (PA), pour amener les poinçons (5) aux positions d'arrêt relatives (PA).

3. Appareil (1) selon la revendication 1 et comprenant :
- des transducteurs (22) configurés pour détecter des quantités indicatives des positions relatives des poinçons (5) et générer des signaux relatifs aux quantités détectées ; et
- une unité de commande (19) configurée pour recevoir les signaux provenant des transducteurs (2 2), extraire des informations des signaux sur les quantités détectées et commander les dispositifs d'actionnement électrique (8) en fonction des informations extraites pour amener les poinçons (5) aux positions d'arrêt relatives (PA).

4. Appareil (1) selon la revendication 3, dans lequel l'unité de commande (19) est configurée pour arrêter les poinçons (5) au moyen des dispositifs d'actionnement électrique (8) lorsque les informations extraites indiquent que les poinçons (5) ont atteint des valeurs seuils des positions d'arrêt relatives (PA).

5. Appareil (1) selon l'une quelconque des revendications 2 à 4 et comprenant des dispositifs de guidage (23) configurés pour guider le mouvement des poinçons (5) suivant des directions rectilignes (G) parallèles entre elles, de sorte que les dispositifs d'actionnement électrique (8), en cours d'utilisation, amènent les poinçons (5) aux positions d'arrêt relatives (PA).

6. Appareil (1) selon la revendication 5 et comprenant un dispositif de transport (24) conçu pour déplacer le moule (2) suivant une direction de transport (T), dans lequel les directions rectilignes (G) se situent sur un plan transversal à la direction de transport (T).

7. Appareil (1) selon la revendication 6, dans lequel le dispositif de transport (24) comprend une bande transporteuse (25) mobile suivant la direction de transport (T) et le moule (2) est porté par ladite bande transporteuse (25) de sorte que ladite bande transporteuse (25), en cours d'utilisation, déplace le moule (2) suivant la direction de transport (T).

8. Appareil (1) selon la revendication 6 ou 7, dans lequel le dispositif de transport (24) est configuré pour, en séquence :
- arrêter le moule (2) au niveau d'une station de poinçonnage (26) comprenant les poinçons (5) et les dispositifs d'actionnement électrique (8), dans lequel l'unité de commande (19) est configurée pour amener les deux poinçons (5) aux positions d'arrêt relatives (PA) lorsque le moule (2) se trouve au niveau de la station de poinçonnage (26) ; et
- faire avancer le moule (2) hors de la station de poinçonnage (26) après que l'unité de commande (19) a amené les deux poinçons (5) aux positions d'arrêt relatives (PA).

9. Appareil (1) selon l'une quelconque des revendications précédentes, dans lequel les poinçons (5) comportent des extrémités convexes respectives (27) pour poinçonner les masses de chocolat (4).

10. Procédé de moulage de produits de confiserie au chocolat au moyen d'un appareil (1) selon l'une quelconque des revendications 1 à 9, le procédé comprend les étapes suivantes :
- le dépôt dans les au moins deux cavités (3) de masses de chocolat (4) respectives ; et
- la commande des deux dispositifs d'actionnement électrique (8) indépendamment de manière à transformer une puissance électrique en un mouvement correspondant des poinçons (5) dans les positions d'arrêt relatives (PA) afin de mouler des coquilles de chocolat (6) entre le moule (2) et les poinçons (5).

11. Procédé selon la revendication 10, dans lequel les poinçons (5) sont déplacés vers les positions d'arrêt relatives (PA) suivant des directions rectilignes (G) parallèles les unes aux autres.

12. Procédé selon la revendication 10 ou 11 et comprenant, dans l'ordre, les étapes suivantes :
- l'arrêt du moule (2) au moyen d'un dispositif de transport (24) au niveau d'une station de poinçonnage (26) comprenant les poinçons (5) et les dispositifs d'actionnement électrique (8) ;
- le fait d'amener les deux poinçons (5) aux positions d'arrêt relatives (PA) lorsque le moule (2) se trouve au niveau de la station de poinçonnage (26) ; et
- l'avancement du moule (2) hors de la station de poinçonnage (26) après que les poinçons (5) ont atteint les positions d'arrêt relatives (PA).

13. Procédé selon l'une quelconque des revendications 10 à 12 et comprenant l'étape de commande en boucle ouverte des dispositifs d'actionnement électrique (8), au moyen de cibles de position relative prédéterminées respectives correspondant auxdites positions d'arrêt relatives (PA), pour amener les poinçons (5) aux positions d'arrêt relatives (PA).

14. Procédé selon l'une quelconque des revendications 10 à 12 et comprenant les étapes suivantes :
- la détection de quantités indicatives des positions relatives des poinçons (5) et la génération de signaux relatifs aux quantités détectées au moyen de transducteurs (22) ;
- l'extraction d'informations à partir des signaux sur les quantités détectées ; et
- la commande des dispositifs d'actionnement électrique (8) en fonction des informations extraites pour amener les poinçons (5) aux positions d'arrêt relatives (PA).

15. Procédé selon la revendication 14, comprenant l'étape d'arrêt des poinçons (5) au moyen des dispositifs d'actionnement électrique (8) lorsque les informations extraites indiquent que les poinçons (5) ont atteint des valeurs seuils des positions d'arrêt relatives (PA).
